# EUROPEAN PATENT APPLICATION

(11) **EP 1 702 751 A1**
(43) Date of publication of application: **20.09.2006**
(21) Application number: 06005065.5
(22) Date of filing: 13.03.2006
(51) Int. Cl.: B32B 25/08, E04F 15/10

(54) **Method of obtaining a covering rubber plate particularly suitable for floorings**

(30) Priority: 15.03.2005 IT VR20050033
(71) Applicant: Prialpas S.P.A., 37060 Sona (Verona) (IT)
(72) Inventor: Parolini, Giuseppe, Verona (IT)
(74) Representative: Reniero, Cirillo Silvano

(57) **Abstract**

Method of producing a rubber sheet or plate particularly for flooring which comprises the following stages in sequence:
- arranging a plurality of rubber sheets;
- laying one or more layers of a finishing material on one surface of each rubber sheet; and
- applying on the layer or layers of a finishing material one or more layers of transparent or translucent protective material.

## Description

The present invention relates to a method of obtaining or producing a rubber covering plate or sheet particularly suitable for floorings and a rubber plate or sheet obtained by such a method.

Plates or sheets of rubber, PVC and the like materials have been used up to now as flooring elements or panels owing to their good properties of stamping resistance and low costs.

However, to obtain floorings provided with desired decorations a number of finishing steps have to be carried out on the rubber sheets, and this can be done by means of working operations, e. g. the application of one or more layers of suitable paints to the sheets to obtain specific optical effects, such as gradation of tones, shading, desired drawings, logos reproduction or the like.

So-called "rubber floors" are obtained at present by moulding a rubber composition to obtain either finished rubber sheets or plates or an uninterrupted laminated tape, which is then cut into finished sheets or plates. Unfortunately, if one or more colouring paint layers are applied to a rubber flooring sheet obtained on a conventional way in order to obtain desired aesthetical effects, such aesthetic effects do not last long owing to the fact that generally colouring paints have a low abrasion resistance and especially poor stamping resistance. Short useful life of aesthetic effects is undesirable and the need has long been felt on the market for a method of obtaining long-lasting personalized rubber flooring elements.

The main object of the present invention is to provide a method of obtaining production of decorated sheets for rubber floorings, such sheets being provided with high resistance in order to guarantee a long-lasting maintenance of their decoration.

Another object of the present invention is to provide a method of obtaining decorated rubber flooring plates or sheets, which is versatile and suitable for allowing decorated rubber sheets to be provided with different kinds of ornament that remain unchanged and clearly visible for the whole useful life of the plates.

Another object of the present invention is to provide a method of obtaining decorated rubber plates or sheets which is cost-effective with respect to methods of manufacturing conventional rubber sheets for use in flooring.

These and other objects that will better appear below are achieved by a method of obtaining rubber sheets particularly for flooring characterized in that it comprises the following stages in sequence:
- arranging at least one rubber sheet;
- laying at least one layer of a finishing material on at least one surface of said at least one rubber sheet; and
- applying at least one layer of transparent or translucent protective material on said at least one layer of finishing material.

Advantageously, said at least one layer of protective material comprises a resin selected from the group including an epossidic, acrylic, alkylic, melaminic, polyester, pherlolic, polyurethanic resin and mixtures thereof.

Preferably, said at least a sheet is a vulcanized rubber sheet and said finishing material is a paint or a paint mixture,

Advantageously, said protective material comprises at least one resin provided with good stamping resistance and is relatively flexible and soft whereby such resin is not subjected to the "crack" phenomenon and thus to easy peeling off,

A method according to the present invention comprises a step of arranging at least one rubber sheet, laying a finishing material on such a sheet, and then applying thereto a transparent or opaque protective material layer, said protective material being liquid before being applied, or a film that can be applied, e.g. glued, to the surface or surfaces of a decorated or not-decorated rubber sheet.

The method according to the present invention is illustrated hereinafter by way of some preferred embodiments.

### Example 1

A vulcanized rubber sheet with a thickness of 4 mm was produced, and on the rubber sheet a layer of a paint comprising 76% ldropol 44017 obtained from Industria Colori Freddi San Giorgio S.r,l. of Mantova - Italy, 12% Nero Special Hydrosic obtained from S.i.c. International S.p.A. at Robbecchetto, Milan - Italy, and 12% Bruno Hydrosic, also obtained from S.i.c. International S.p.A. was roller coated by means of a roller having an engraved surface.

The paint was dried by means of a hot air jet at a temperature of 130°C, and a second layer of paint comprising 80% ldropol 44017, 18% Nero Special Hydrosic and 2% Bruno Hydrosic was applied using a roller with a photo-engraved surface in order to print the drawing of a shaded away cloud.

The second layer was then dried by means of a hot air jet at a temperature of 130°C and a brown cloud finishing was obtained on a lighter-brown background.

The application of the second layer by means of a photo-engraved roller made it possible to obtain a non-uniform distribution of the paint and thus to obtain a shaded off cloud print with a desired soft effect.

As a last working stage a layer of transparent paint ZG-4-67 A obtained from Stahl Italia SpA company at Arzignano of Vicenza - Italy comprising a hybrid of polyurethane and polycarbonate resin, and reticulated polysiloxane with poliaziridine was applied by means of spray coating.

An abrasion test with Taber method (grindstone CS17, applied weight = 1000 g at 1000 rpm) and a good abrasion resistance was detected as the resulting surface was almost unchanged.

### Example 2

The production method of Example 1 was repeated except that a transparent paint ZG-4-67 D, obtained from Stahl ltalia SpA and comprising a hybrid of polyurethane and polycarbonate resin, and reticulated polysiloxane with poliaziridine, was applied.

An abrasion test with Taber method (with the same parameters as mentioned above) was conducted and an abrasion resistance grater than the abrasion resistance of the sheet obtained in the Example 1 was detected.

### Example 3

A vulcanized rubber sheet with a thickness of 3 mm was produced, and a paint layer comprising 76% ldropol 44017, 12% Nero Special Hydrosic and 12% Bruno Hydrosic was roller coated onto it using a roller provided with an engraved surface.

The paint was dried by means of a hot air jet at a temperature of 130°C and a second layer of paint comprising 80% ldropol 44017, 18% Nero Special Hydrosic and 2% Bruno Hydrosic was applied using a roller having a photo-engraved surface to obtain the drawing of shaded cloud.

The second layer was then dried by a hot air jet at a temperature of 130°C and a brown cloud finishing on a lighter-brown background was obtained.

On such a polyurethanic paint finishing a transparent photopolymerizable polyester paint formulation was applied in order to obtain high hardness and resistance to chemical attack and yellowing, A formulation comprising 50% L3619 obtained from Lonza S.p.A. at San Giovanni Valdarno of Arezzo - Italy, 47%. SR444D obtained from Cray Valley company at Barasso of Varese - Italy with 0,5% photoinitiator lrgacure 819 and 2,5% photoinitiator Darocur 1173 both supplied by Ciba S,p,A of Milan, was applied by roller coating,

Thereafter the same formulation was modified by adding nanobatches dispersed in a polyester acrylate, i. e. PO 9026V (15%) supplied by Basf ltalia S.p.a. at Cesano Mademo, Milan - Italy.

A photopolymerization was then conducted by means of two UV lamps (Hg and Ga) travelling at a speed of 5 m/minute.

Formulation components were selected in order to give a good stability to solar radiations and a good resistance to chemical attack. The mechanical properties of the protection layer depend upon the degree of reticulation. Repetitive and extended exposure to UV lamps of the decorated and covered sheet caused an increase in the hardness of the protection layer or film.

In the third example, in which nanobatches dispersed in polyester acrylate were used, an increase of the surface hardness was detected, and a light opalescence was observed due to emergence of the nanobatches at the surface of the photopolymerized film,

In the following table the obtained surface hardnesses are indicated in DK hardness, which indicates Koenig hardness, such hardness values being evaluated on a films of 2 mm deposited on glass, quartz having a hardness value of 262+/-4s DK being used as a reference.

**Protection Test**

| Numbers of passages of UV lamps | Transportation speed | Hardness DK value |
|---|---|---|
| 1 | 5 m/minute | 95+/-12s |
| 2 | 5 m/minute | 116+/-11s |
| 3 | 5 m/minute | 121+/-15s |
| 4 | 5 m/minute | 129+/-12s |
| 5 | 5 m/minute | 123+/-10s |
| 6 | 5 m/minute | 127+/-1s |
| 7 | 5 m/minute | 132+/-5s |
| 8 | 5 m/minute | 150+/-16s |

**Protection Test 2**

| Numbers of passages of UV lamps | Transportation speed | Hardness DK value |
|---|---|---|
| 1 | 5 m/min | 168+/-17s |
| 2 | 5 m/min | 190+/-4s |
| 3 | 5 m/min | 194+/-9s |
| 4 | 5 m/min | 201+/-11s |
| 5 | 5 m/min | 199+/-3s |
| 6 | 5 m/min | 194+/-2s |
| 7 | 5 m/min | 197+/-5s |
| 8 | 5 m/min | 195+/-1s |

The surface hardnesses of photopolymerizable films should be higher than 180-190s in order to have a good abrasion resistance. To contrast the brittleness increase of the film which is subjected to various passages of UV lamps, thicknesses lower than 0,5 mm have been used,

Such tests have shown that, when covering a painted rubber compound layer with a resin layer, a sheet or plate is obtained which can be fixed to flooring structures, and can resist to abrasion due to repeated stamping in an optimum way.

### Example 4

A vulcanized rubber sheet having a thickness of 3,5 mm was produced and a paint layer comprising 70% ldropol 44017, 15% Nero Special Hydrosic and 15% Bruno Hydrosic was spray coated on it.

The paint was dried by a hot air jet at a temperature of 130°C and a second layer of paint comprising 70% ldropol 44017,20% Nero Special Hydrosic and 10% Bruno Hydrosic was applied using a roller with a photo-engraved surface in order to print the design of a cloud.

The second layer was then dried by a hot air jet at a temperature of 130°C and a brown cloud finishing on a lighter-brown background was obtained.

Following the second layer application by means of a photo-engraved roller a non-uniform distribution was caused and a cloud printed with a shaded effect was obtained.

Then a layer of a hybrid of transparent adhesive thermoplastic polyurethane ZG-4-51 supplied by Stahl Italia SpA of Arzignano, Vicenza -Italy was spray coated.

As a last working stage a polyurethane film of JTC1003 supplied by PM3 Italia of Milan was applied to the rubber sheet as a transparent protection material. Polyurethanic films with a thickness of 15µ and 100µ were tested. The films were applied by applying a pressure of 130 bar to a flat mould heated at a temperature of 150° for 300 seconds.

Owing the temperature and pressure developed in the last working stage the thermoplastic adhesive is activated and thus it sticks to the polyurethane film.

Both the rubber sheets protected by polyurethane films with a thickness of 15µ and 100µ, respectively, were subjected to an abrasion test with Taber method (grindstone CS18, applied weight = 1000 g at 1000rpm) an optimum abrasion, resistance was detected, the resulting surface remaining almost unchanged.

### Example 5

The method of Example 4 was repeated except that the films were applied by means of a rotary vulcanizer, The rotary vulcanizer comprises a steam-heated roller with a diameter of about 1 m, and a steel belt which extends around a substantial part of the roller.

The rubber sheets covered by a polyurethane film were pressed between the heated roller and the steel belt. The coller temperature was kept at about 160°C, the rubber sheets were fed at 50 cm/minute and the steel belt was loaded in order to press the rubber sheets at a pressure of 2 kg/cm².

With the use of the rotary vulcanizer a better and uniform application of the film with respect to the flat mould was obtained,

### Example 6

The method of Example 5 was repeated except that the roller was kept at a temperature of about 140°C. At such a roller temperature, however, the film adhesion to the rubber became reduced.

In both Examples 5 and 6 a release paper between the polyurethanic film and the steel belt was arranged.

Release paper has an embossed surface and is arranged between the polyurethanic film and the steel belt in order to give to the rubber sheets a sham leather appearance.

Using a sheet obtained by the method according to the present invention it is possible to obtain a decorated floor having on the one side a highly desirable range of colours, and on the other a long lasting high waste resistance.

The invention as described above is susceptible to numerous modifications and variations within the scope as defined by the claims.

## Claims

1. A method of producing a rubber sheet or plate particularly for flooring **characterized in that** it comprises the following stages in sequence:
- arranging at least one rubber sheet;
- laying at least a layer of finishing material on at least one surface of said at least one rubber sheet; and
- applying at least one layer of transparent or translucent protective material on said at least one layer of finishing material.

2. A method as claimed in claim 1, **characterized in that** said protective material comprises a resin selected from the group including epossidic, acrylic, alkylic, melaminic, polyester, phenolic, polyurethanic resin and their mixtures.

3. Method as claimed in claim 2, **characterized in that** said at least one layer of protective material comprises a hybrid of polyurethane and polycarbonate resin, and reticulated polysiloxane with poliaziridine,

4. A method as claimed in claim 2, **characterized in that** said at least one layer of protective material comprises a hybrid of polyurethane and polycarbonate resin, and reticulated polysiloxane with poliaziridine.

5. A method as claimed in claim 2, **characterized in that** said at least one layer of protective material comprises a transparent photopolymerizable polyester based paint formulation.

6. A method as claimed in claim 5, **characterized in that** said protective material comprises nanobatches dispersed in a polyester acrylate.

7. Method as claimed in any previous claim, **characterized in that** said finishing material is a paint or a paint mixture.

8. A method as claimed in any previous claim, **characterized in that** said finishing material is applied by a roller having an engraved surface.

9. A method as claimed in any previous claim, **characterized in that** it comprises a stage of drying said applied finishing material by means of a hot air jet at a temperature ranging from 100°C to 200°C.

10. A method as claimed in any previous claim, **characterized in that** said at least one sheet comprises a vulcanized rubber sheet.

11. A method as claimed in any previous claim, **characterized in that** said protective material comprises at least one resin provided with good stamping resistance.

12. A method as claimed in any previous claim, **characterized in that** said protective material is liquid before being applied.

13. A method as claimed in claim 12, **characterized in that** said protective material is applied by spray coating.

14. A method as claimed in any previous claim 1 to 11, **characterized in that** said protective material is a film.

15. A method as claimed in claim 14, **characterized in that** it comprises a stage of applying at least one layer of adhesive material on said layer of a finishing material, and at least one layer of said protective material in film form on said at least one layer of adhesive material.

16. A method as claimed in claim 14, **characterized in that** said at least one layer of adhesive material comprises transparent adhesive hybrid thermoplastic polyurethane.

17. A method as claimed in any previous claim 14 to 16, **characterized in that** said protective material in a film form has a thickness ranging from about 10µ to 150µ.

18. A method as claimed in any previous claim 14 to 17, **characterized in that** said protective material is applied by means of a flat mould heated at a temperature ranging from 100°C to 150°.

19. A method as claimed in any previous claim 14 to 17, **characterized in that** said protective material is applied by means of a rotary vulcanizer.

20. A method as claimed in claim 19, **characterized in that** said rotary vulcanizer comprises a heated roller and a steel belt which is arranged around most of said roller, and said at least one rubber sheet and said protective material are pressed between said heated roller and said steel belt.

21. A method as claimed in claim 20, **characterized in that** said rubber sheet is pressed between said heated roller and said steel belt at a pressure of 2 kg/cm².

22. A method as claimed in claim 20 or 21, **characterized in that** said protective material is arranged closer to said heated roller whereas said at least one rubber sheet is located closer to said steel belt, and **in that** a layer of release paper is arranged between said protective material and said heated roller.

23. A method as claimed in any previous claim, **characterized in that** it comprises a stage of photoreticulating said protective material.

24. A method as claimed in claim 23, **characterized in that** said stage of photoreticulating comprises exposing said protective material to UV lamps.

25. A covering panel when obtained by a method according to any previous claim.
